# EUROPÄISCHE PATENTANMELDUNG

(11) **EP 2 048 669 A2**
(43) Veröffentlichungstag der Anmeldung: **15.04.2009**
(21) Anmeldenummer: 08014957.8
(22) Anmeldetag: 25.08.2008
(51) Int. Cl.: G21C 15/16

(54) **Dampftrockner für Reaktordruckbehalter**

(30) Priorität: 09.10.2007 DE 102007048478
(71) Anmelder: Areva NP GmbH, 91052 Erlangen (DE)
(72) Erfinder: Lemm, Andreas, 90403 Nürnberg (DE)
(74) Vertreter: Tergau & Pohl Patentanwälte

(57) **Zusammenfassung**

Die Erfindung betrifft einen vertikal durchströmten Dampftrockner (10), insbesondere für einen Kernreaktor, mit einer Mehrzahl von Wasserkästen (22) zur Ableitung von aus dem Dampf abgeschiedenem Wasser, die unterhalb von durchströmten Trocknerelementen (14) angeordnet sind.

Die Wasserkästen (22) des Dampftrockners (10) weisen jeweils in Strömungsrichtung einen strömungsgünstigen Querschnitt auf.

## Beschreibung

Die vorliegende Erfindung betrifft einen Dampftrockner für einen Reaktordruckbehälter, insbesondere einen vertikal durchströmten Dampftrockner für einen Kernreaktor, mit einer Mehrzahl von Wasserkästen zur Ableitung von aus dem Dampf abgeschiedenem Wasser, die unterhalb von durchströmten Trocknerelementen angeordnet sind.

Der Reaktordruckbehälter eines modernen Leichtwasserreaktors ist ein zylindrischer Stahlbehälter mit halbkugelförmigem Boden und Deckel, der mit den Rohrleitungen für das Kühlmittel verbunden ist. Zum Brennelementwechsel und für Wartungsarbeiten kann der obere Deckel abgehoben werden. Der Deckel ist mit zahlreichen vorgespannten Schraubbolzen und Muttern mit dem Druckbehälterunterteil verbunden. Der Reaktordruckbehälter enthält insbesondere den Reaktorkern mit den uranhaltigen Brennelementen sowie die als Kernbauteile bezeichneten Strukturen, welche die Brennelemente an Ihrem vorgesehenen Platz fixieren, bspw. das obere und untere Kerngitter, die Brennelementkästen etc.

Bei einem Siedewasserreaktor enthält der Reaktordruckbehälter außerdem einen Wasserabscheider bzw. einen Dampftrockner, der Wassertröpfchen aus dem erzeugten Dampf abscheidet und im Reaktordruckbehälter zurückhält. Die im Dampf enthaltenen Wassertröpfchen könnten andernfalls die Turbine beschädigen. Bekannte Wasserabscheider bzw. Dampftrockner weisen Wasserkästen auf, in denen das aus dem Dampf abgeschiedene Wasser gesammelt und abgeleitet wird. Da diese Wasserkästen stromaufwärts der zu trocknenden Dampfströmung angeordnet sind, setzen sie der Strömung einen gewissen Widerstand entgegen und sind teilweise für Wirbelbildungen und Störungen in der Strömung verantwortlich zu machen. Ist eine Leistungserhöhung des Dampftrockners gefordert, kann dies zu Problemen führen.

Der Erfindung liegt daher die Aufgabe zu Grunde, einen verbesserten Dampftrockner zur Verfügung zu stellen, der für Leistungserhöhungen mit erhöhtem Dampfdurchsatz in gewissem Ausmaß geeignet ist.

Diese Aufgabe wird erfindungsgemäß gelöst durch einen neuartigen Dampftrockner. Der vertikal durchströmte Dampftrockner weist eine Mehrzahl von Wasserkästen zur Ableitung von aus dem Dampf abgeschiedenem Wasser auf, die unterhalb von durchströmten Trocknerelementen angeordnet sind. Gemäß der vorliegenden Erfindung ist vorgesehen, dass die Wasserkästen jeweils in Strömungsrichtung einen strömungsgünstigen Querschnitt aufweisen. Die Wasserkästen können bspw. jeweils in Strömungsrichtung einen abgerundeten Querschnitt aufweisen. Sie können alternativ einen keilförmigen, einen tropfenförmigen, einen ovalen oder anders gearteten strömungsgünstigen Querschnitt aufweisen. Durch die Vermeidung einer Einschnürung der Strömung kann bei reduzierten Abständen der Wasserkästen voneinander ein höherer Dampfdurchsatz erzielt werden. Auf der gleichen Grundfläche können mehr Trocknerelemente untergebracht werden, so dass eine verbesserte Wirkung des Trockners erzielt werden kann. Zudem kann durch die Vermeidung von Randwirbeln in der Einlaufströmung die Anregung von Schwingungen in der Strömung reduziert werden.

Eine weitere Ausführungsform der Erfindung sieht vor, dass die Wasserkästen jeweils weitgehend gleiche Abstände voneinander mit weitgehend konstanten Durchlassquerschnitten für den zu trocknenden Dampf aufweisen. Vorzugsweise weisen die Wasserkästen jeweils strömungsgünstige Übergange zu den stromabwärts nachgeordneten Trocknerelementen auf. Zudem kann es von Vorteil sein, wenn die Wasserkästen jeweils mit Ablaufleitungen verbunden sind, die ebenfalls jeweils einen strömungsgünstigen Querschnitt aufweisen.

Die strömungsgünstigen Einläufe sind gegenüber den bisher verwendeten Querschnitten und Geometrien ohne wesentlich höheren Fertigungsaufwand herstellbar, wobei auch ausreichende Querschnitte für das ablaufende Wasser erhalten bleiben.

Mit Hilfe der erfindungsgemäßen Gestaltungen können deutliche Leistungserhöhungen bei Dampftrocknem erzielt werden, ohne dass dies zu weiteren Problemen wie bspw. Überlastungserscheinungen führt. Die strömungsgünstige Gestaltung der quer zur Strömung liegenden Bauteile verhindert bzw. reduziert die Wirbelbildung. Das dampfhaltige Medium kann ungehindert und ohne nennenswerte Einschnürung an der Störstelle vorbei strömen, wobei die Querschnittsfläche der Wasserkästen voll erhalten bleibt. Die Trocknerpakete können somit enger aneinander gerückt werden oder mit einer größeren Bauhöhe ausgeführt werden. Somit kann insgesamt eine größere Trocknerfläche im Reaktordruckbehälter untergebracht werden, ohne dass dies mit weiteren negativen Effekten auf die Funktion verbunden wäre.

Ein Ausführungsbeispiel der Erfindung wird anhand einer Zeichnung näher erläutert. Darin zeigen:
Fig. 1 eine schematische Darstellung eines Dampftrockners in einem Reaktordruckbehälter,
Fig. 2 eine schematische Darstellung eines eckigen Strömungsquerschnitts der Wasserkästen des Dampftrockers gemäß bekanntem Stand der Technik,
Fig. 3 eine schematische Darstellung eines runden Strömungsquerschnitts der Wasserkästen des Dampftrockers,
Fig. 4 eine schematische Darstellung eines spitz zulaufenden Strömungsquerschnitts der Wasserkästen des Dampftrockers,
Fig. 5 eine schematische Darstellung eines konisch zulaufenden Strömungsquerschnitts der Wasserkästen des Dampftrockers, und
Fig. 6 eine schematische Darstellung eines oval zulaufenden Strömungsquerschnitts der Wasserkästen des Dampftrockers.

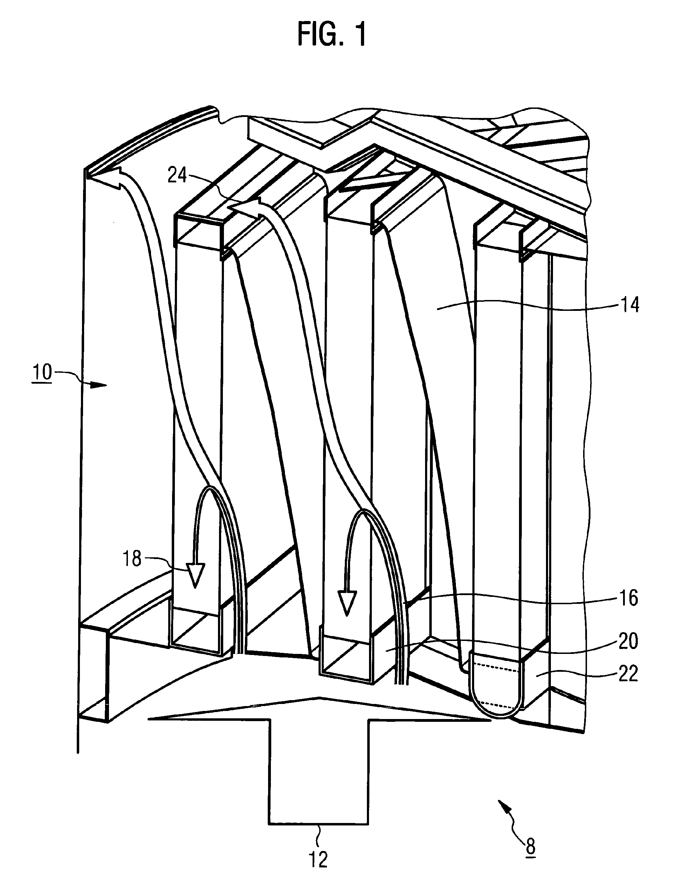

Die schematische Darstellung der Fig. 1 verdeutlicht die Anordnung eines Dampftrockners 10 in einem Reaktordruckbehälter 8. Feuchter Dampf bildet einen Zustrom 12 von den Separatoren (nicht dargestellt) zu den Trocknerpaketen 14 des Dampftrockners 10. Der in dieser Strömung 12 zu etwa 5 % enthaltene Dampf 16 wird in den Trocknerpaketen 14 abgeschieden und als Wasser 18 in die unterhalb der Trocknerpakete 14 angeordneten Wasserkästen 20 und 22 geleitet, von wo aus es abgeführt wird. Die Bezugsziffer 20 bezeichnet dabei Wasserkästen herkömmlicher Geometrie mit kantigen Querschnitten, die der Strömung 12 einen relativ hohen Widerstand entgegen setzen und zur Wirbelbildung beitragen können. Die Bezugsziffer 22 bezeichnet dagegen Wasserkästen mit verbesserter, strömungsgünstiger Querschnittsgestaltung, die in ihren alternativen Formen anhand der folgenden Figuren näher erläutert wird. Nach oben stömt aus den Trocknerpaketen 14 schließlich trockener Dampf 24.

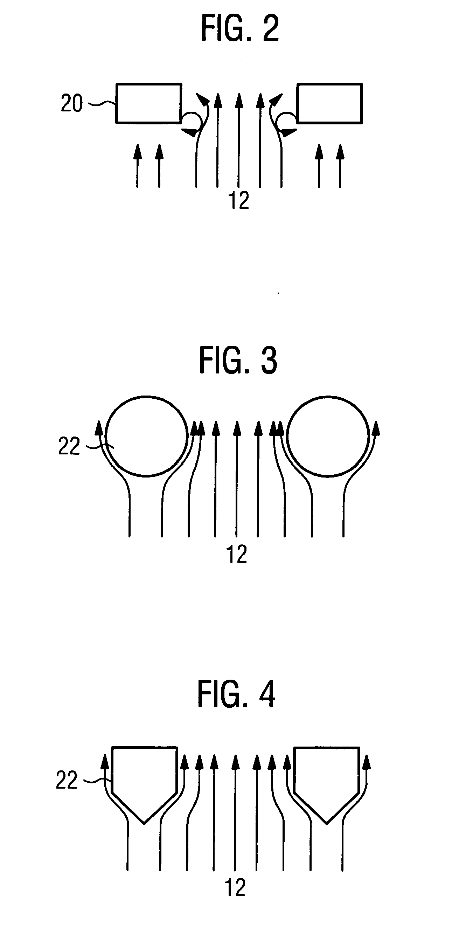

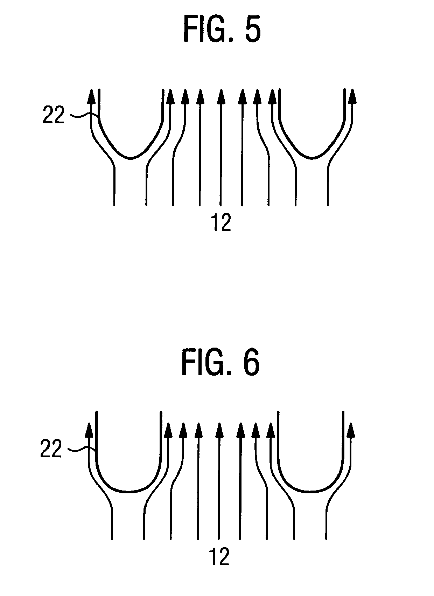

Die schematische Darstellung der Fig. 2 zeigt einen eckigen Strömungsquerschnitt der Wasserkästen 20 des Dampftrockers 10 gemäß dem bekannten und bisher verwendeten Stand der Technik, wobei deutlich wird, dass die eckigen Querschnitte der Wasserkästen dem zuströmenden feuchten Dampf 12 einen deutlich höheren Widerstand entgegen setzen als die alternativen Querschnittsgestaltungen gemäß vorliegender Erfindung, wie sie in den Figuren 3 bis 6 gezeigt sind. Dabei zeigt die Fig. 3 eine schematische Darstellung eines runden Strömungsquerschnitts der Wasserkästen 22 des Dampftrockers 10. Fig. 4 zeigt eine schematische Darstellung eines spitz zulaufenden Strömungsquerschnitts der Wasserkästen 22 des Dampftrockers 10. Fig. 5 zeigt eine schematische Darstellung eines konisch zulaufenden Strömungsquerschnitts der Wasserkästen 22 des Dampftrockers 10. Fig. 6 zeigt schließlich eine schematische Darstellung eines oval zulaufenden Strömungsquerschnitts der Wasserkästen 22 des Dampftrockers 10.

### Bezugszeichenliste

- 8: Reaktordruckbehälter
- 10: Dampftrockner
- 12: Zustrom dampfhaltiger Luft
- 14: Trocknerpaket
- 16: Dampf
- 18: Wasser
- 20: Wasserkasten
- 22: Wasserkasten
- 24: trockener Dampf

## Patentansprüche

1. Vertikal durchströmter Dampftrockner (10), insbesondere für einen Kernreaktor (8), mit einer Mehrzahl von Wasserkästen (20, 22) zur Ableitung von aus dem Dampf (12) abgeschiedenem Wasser, die unterhalb von durchströmten Trocknerelementen (14) angeordnet sind, **dadurch gekennzeichnet, dass** die Wasserkästen (22) jeweils in Strömungsrichtung einen strömungsgünstigen Querschnitt aufweisen.

2. Dampftrockner nach Anspruch 1, **dadurch gekennzeichnet, dass** die Wasserkästen (22) jeweils in Strömungsrichtung einen abgerundeten Querschnitt aufweisen.

3. Dampftrockner nach Anspruch 1, **dadurch gekennzeichnet, dass** die Wasserkästen (22) jeweils in Strömungsrichtung einen keilförmigen Querschnitt aufweisen.

4. Dampftrockner nach Anspruch 1, **dadurch gekennzeichnet, dass** die Wasserkästen (22) jeweils in Strömungsrichtung einen tropfenförmigen Querschnitt aufweisen.

5. Dampftrockner nach Anspruch 1, **dadurch gekennzeichnet, dass** die Wasserkästen (22) jeweils in Strömungsrichtung einen ovalen oder anders gearteten strömungsgünstigen Querschnitt aufweisen.

6. Dampftrockner nach einem der Ansprüche 1 bis 5, **dadurch gekennzeichnet, dass** die Wasserkästen (22) jeweils weitgehend gleiche Abstände voneinander mit weitgehend konstanten Durchlassquerschnitten für den zu trocknenden Dampf (12) aufweisen.

7. Dampftrockner nach einem der Ansprüche 1 bis 6, **dadurch gekennzeichnet, dass** die Wasserkästen (22) jeweils strömungsgünstige Übergange zu den stromabwärts nachgeordneten Trocknerelementen (14) aufweisen.

8. Dampftrockner nach einem der Ansprüche 1 bis 7, **dadurch gekennzeichnet, dass** die Wasserkästen (22) jeweils mit Ablaufleitungen verbunden sind, die jeweils einen strömungsgünstigen Querschnitt aufweisen.
